# EUROPÄISCHE PATENTSCHRIFT

(11) **EP 3 028 962 B1**
(45) Veröffentlichungstag und Bekanntmachung des Hinweises auf die Patenterteilung: **04.01.2017**
(21) Anmeldenummer: 15197239.5
(22) Anmeldetag: 01.12.2015
(51) Int. Cl.: B65G 17/32, B65G 17/46, B65G 21/20

(54) **FÖRDERKETTE FÜR WERKSTÜCKTRANSPORTEINRICHTUNG**
CONVEYOR CHAIN FOR WORKPIECE TRANSFER APPARATUS
CHAINE DE TRANSPORT POUR UN DISPOSITIF DE TRANSPORT DE PIECES A USINER

(30) Priorität: 02.12.2014 DE 102014224603
(43) Veröffentlichungstag der Anmeldung: 08.06.2016
(73) Patentinhaber: HOMAG GmbH, 72296 Schopfloch (DE)
(72) Erfinder: Rathgeber, Peter, 72280 Dornstetten (DE)
(74) Vertreter: Hoffmann Eitle

(56) Entgegenhaltungen:
- WO-A1-2010/089101
- DE-A1- 4 317 698
- DE-A1- 19 847 249

## Beschreibung

### Technisches Gebiet

Die vorliegende Erfindung betrifft eine Förderkette für Werkstücktransporteinrichtung, die bei einer Bearbeitungsmaschine aus dem Bereich der Durchlaufbearbeitung zum Einsatz kommt. Mit einer solchen Bearbeitungsmaschine werden bevorzugt plattenförmige Werkstücke oder längliche Werkstücke (Kanthölzer) aus Holz, Holzwerkstoffen, Kunststoff oder metallische Werkstücke während einer kontinuierlichen oder getakteten Bewegung bearbeitet. Das Einsatzgebiet einer solchen Bearbeitungsmaschine liegt insbesondere im Bereich der Möbel- und Bauelementeindustrie. Ferner betrifft die Erfindung eine Werkstücktransporteinrichtung und eine Bearbeitungsmaschine mit einer solchen Werkstücktransporteinrichtung.

### Stand der Technik

Im Bereich der Durchlauftechnik ist es bekannt, Werkstücke zwischen einem Förderriemen bzw. einer Förderkette und einem Oberdruckriemen einzuspannen. Während die Werkstücke im eingespannten Zustand gefördert werden, wird eine Schmalseite im Durchlauf bearbeitet. Die mit einer solchen Bearbeitungsmaschine transportierten und bearbeiteten Werkstücke sind üblicherweise plattenförmig, insbesondere rechtwinklig. Rein beispielhaft handelt es sich um Möbelfronten, Möbelkorpuse, Einlegebretter, im Bereich Büro, Küchen, Schlaf- und Wohnmöbel, Fußbodenpaneele, usw.

Auch ist es bekannt, bei Bearbeitungsmaschinen aus dem Bereich der Durchlauftechnik den Oberdruckriemen wegzulassen. Beispielsweise zeigt die DE 10 2010 042753 A1 eine Vorrichtung zum Halten von Werkstücken mit einem Halteelement, das zumindest abschnittsweise mit einer Haftmittelschicht versehen ist. Die Hafteigenschaften dieser Haftmittelschicht können durch Energieeintrag verändert werden. Zusätzlich ist es möglich, für jedes Halteelement eine Saugeinrichtung vorzusehen, wobei das Halteelement in diesem Fall Saugöffnungen aufweist, die sich durch die Haftmittelschicht hindurch erstrecken können. In einer Ausführungsform kann sich das Haftmittel auch den sogenannten "Gecko-Effekt" zunutze machen. Das bedeutet, dass innerhalb des Haftmittels vorgesehene Strukturen gebildet sind, die durch den Energieeintrag eine Haft- bzw. Verbundwirkung entfalten.

Auch wenn es jeher Bestrebungen gibt, in der Durchlauftechnik Mechanismen für eine mehrseitige Bearbeitung von insbesondere plattenförmigen Werkstücken bereitzustellen, ist es problematisch, Werkstücke mit ausreichender Kraft an der Transportkette zu halten, mit der ein Verrutschen der Werkstücke verhindert wird. Aus diesem Grund finden Bearbeitungsmaschinen, wie in der DE 10 2010 042753 A1 beschrieben, nur zögerlich Eingang in die Praxis.

DE 43 17 698 A1 zeigt eine gattungsgemäße Förderkette.

### Gegenstand der Erfindung

Ziel der vorliegenden Erfindung ist es, eine Förderkette für Werkstücktransporteinrichtung bereitzustellen, mit der die oben genannten Probleme behoben werden, und die eine optimale Kombination aus kurzer Taktzeit und präziser Bearbeitungsmöglichkeit bereitstellt.

Dieses Ziel wird mit einer Förderkette gemäß Anspruch 1 gelöst. Weitere bevorzugte Ausführungsformen sind in den abhängigen Ansprüchen aufgeführt.

Die vorliegende Erfindung stellt eine Förderkette bereit, umfassend: Eine Kette, die eine Vielzahl von insbesondere magnetisch anziehbaren, beispielsweise metallischen, Kettengliedern aufweist, und einen Versorgungsstrang mit einer Vielzahl von Versorgungsglieder, welcher Versorgungsstrang parallel zur Kette geführt ist. Die Förderkette zeichnet sich dadurch aus, dass die Kette und der Versorgungsstrang mittels gemeinsamer Platten zur Aufnahme eines Halteelements in Verbindung stehen.

Die genannten Platten stellen somit eine feste Verbindung zwischen den einzelnen Kettengliedern und Versorgungsgliedern bereit, und können ferner eine Zuleitung zwischen dem Versorgungsstrang und einem Halteelement darstellen.

Dabei sind die Kettenglieder und die Versorgungsglieder bevorzugt paarweise mittels der Platte miteinander verbunden und können somit um Kettenräder geführt werden.

Ferner können die Platten einen Kanal zur Verbindung eines Halteelements mit dem Versorgungsstrang aufweisen. Dieser dient als Verbindungsleitung vom Versorgungsstrang zum Halteelement und ist somit durch die Integration in der Platte kompakt aufgenommen.

Es ist bevorzugt, dass die Platten in dem Bereich, der der Kette gegenüberliegt, einen Anschlussbereich für ein Halteelement aufweisen. Somit wird ein Halteelement in dem Bereich befestigt, der besonders durch die positiven Eigenschaften der Kette profitiert, wie der geradlinigen Führung und der Vermeidung von Vibrationen.

In einer weiteren Ausführungsform ist an mindestens einer der Platten ein Halteelement angebracht, wobei das Halteelement eine insbesondere pneumatisch betätigbare Klemmeinrichtung, elektromechanische Klemmeinrichtung oder ein Vakuumsauger ist.

Wird das Werkstück mittels einer pneumatischen oder elektromechanischen Klemmeinrichtung an der Förderkette fixiert, erfolgt die Versorgung der Klemmeinrichtung mit Über- oder Unterdruck über den Versorgungstrang. Auch können elektrische Versorgungsleitungen in oder am Versorgungstrang geführt werden.

Dabei wird bevorzugt eine Gruppe von Klemmeinrichtung bereitgestellt, die in Abständen zueinander entlang der Förderkette vorgesehen sind.

Ferner kann die Förderkette zusätzlich ausgestaltet sein, dass Werkstück mittels Vakuum an der Förderkette zu fixieren.

Ferner ist es ebenfalls denkbar, dass die Klemmeinrichtung(en) ausgestaltet ist (sind), im Bereich der Bearbeitungseinrichtungen das Werkstück freizugeben und sich entweder quer zur Förderrichtung zurückzuziehen oder in Höhenrichtung der Vorrichtung abzusenken, sodass keine der Werkstückseiten durch die Klemmeinrichtung blockiert und somit eine Rundumbearbeitung ermöglicht wird.

Besonders bevorzugt wird das Werkstück lediglich von der Auflageseite des Werkstücks aus fixiert wird. Dies wird beispielsweise mittels eines Vakuumsaugers durchgeführt, die auf einer Förderkette der Fördereinrichtung fixiert sind und demnach bei Bewegung der Förderkette mitbewegt werden.

Alternativ können, wie bereits zuvor erwähnt, an der Förderkette fixierte Klemmeinrichtungen/Spanner vorgesehen sein.

Es ist bevorzugt, dass an mindestens einer der Platten ein Halteelement angebracht ist, wobei das Halteelement eine insbesondere pneumatisch, mechanisch oder elektromechanisch betätigbare Klemmeinrichtung oder ein Vakuumsauger ist. Durch ein solches Halteelement, durch welches kein Oberdruck zum Halten der Werkstücke verwendet wird, wird ein Werkstück sicher aufgenommen und gehalten, und durch die beabstandete Aufnahme des Werkstücks gegenüber den Platten der Förderkette ist eine zumindest fünfseitige Bearbeitung möglich.

In einer bevorzugten Ausgestaltung sind die Versorgungsglieder Spritzgusselemente, die miteinander einen gemeinsamen Kanal, insbesondere einen Vakuumversorgungskanal, oder und Druckluftkanal ausbilden, wobei insbesondere jedes Versorgungsglied eine Dichtung zur Ausbildung einer luftdichten Verbindung zum benachbarten Versorgungsglied aufweist. Spritzgusselemente haben dabei den Vorteil, dass diese relativ kostengünstig herstellbar sind.

In einer alternativen Ausgestaltung sind die Versorgungsglieder mittels einem Schlauchelement verbunden, um einen gemeinsamen Kanal, insbesondere Vakuumversorgungskanal oder und Druckluftkanal, ausbilden. Diese Ausgestaltung ist eine konstruktiv und fertigungstechnisch einfach umzusetzende Variante.

Die Anbindung des Versorgungsstrangs an eine Über- oder und Unterdruckquelle wird beispielswiese mittels einer Schleppkette oder eines Versorgungsrades gewährleistet.

Ferner betrifft die vorliegenden Erfindung eine Werkstücktransporteinrichtung für eine Bearbeitungsmaschine, mit welcher Bearbeitungsmaschine Werkstücke aus Holz, Holzwerkstoffen, Kunststoff oder metallische Werkstücke während einer kontinuierlichen, alternierenden oder getakteten Bewegung bearbeitet werden können. Die Werkstücktransporteinrichtung weist auf: Eine Kettenführungsschiene mit Kettenrädern, sowie eine entlang der Kettenführungsschiene und Kettenräder geführte Förderkette gemäß einer der zuvor genannten Ausgestaltungen.

Zur Abstützung der Förderkette kann ein Kettenförderer eine Kettenführungsschiene umfassen, die eine Lauffläche für die Förderkette bereitstellt. Die Förderkette wird dabei um zwei in Endbereichen des Kettenförderers angeordnete Kettenräder bewegt, von denen zumindest eines angetrieben wird.

In einer weiteren Ausgestaltung kann die Werkstücktransporteinrichtung mehrere Kettenführungsschienen mit entsprechenden Förderketten aufweisen. Somit können größere Werkstücke aufgenommen und gefördert werden.

In einer bevorzugten Ausführungsform ist bevorzugt mittig zwischen den Kettenrädern eine Drehdurchführung angeordnet, welche Drehdurchführung mit einer Schleppkette verbunden ist, wobei die Schleppkette an einem Einspeiseglied des Versorgungsstrangs befestigt ist.

Gemäß einer alternativen Ausgestaltung ist an zumindest einem der Kettenräder ein Versorgungsrad vorgesehen, welches sich zusammen mit dem Kettenrad dreht. Über das Versorgungsrad wird der Versorgungsstrang bspw. mit Vakuum versorgt.

Innerhalb des Versorgungsrads kann eine Aufnahmekammer vorgesehen sein, die mittels eines im Bereich der Achse des Versorgungsrads vorgesehenes Einspeiseglied mit Unter- oder Überdruck versorgt wird. Die Aufnahmekammer ist bevorzugt mit in gleichen Winkelabständen um das Versorgungsrad angeordneten Auslässen in Verbindung. Die Auslässe sind derart ausgestaltet, dass sie jeweils in einen Einlass eines Versorgungsglieds eingreifen können.

Ferner betrifft die vorliegende Erfindung eine Bearbeitungseinrichtung mit einem Träger sowie zumindest einem am Träger angebrachten Bearbeitungsmodul, welcher Träger parallel zur Kettenführungsschiene angeordnet ist.

In einer Ausgestaltung sind mehrere Bearbeitungsmodule vorgesehen. Dabei können die Bearbeitungsmodule auf einer Seite der Kettenführungsschiene angeordnet sein. Dies stellt eine relativ einfache, kostengünstige und platzsparende Vorrichtung bereit.

Alternativ kann auf beiden Seiten der Kettenführungsschiene Bearbeitungsmodule vorgesehen werden. Somit besteht die Möglichkeit, bspw. auf beiden Seiten der Schmalfläche eines Werkstücks gleichzeitig Bearbeitungen durchzuführen.

Alternativ oder zusätzlich kann an einem Bearbeitungsmodul zwei Bearbeitungseinheiten und aufgenommen werden, um z.B. beide Schmalflächen eines Werkstücks parallel zu bearbeiten.

In einer bevorzugten Ausführungsform ist/sind die Bearbeitungseinrichtung(en) ausgewählt aus einer Format-, einer Profil-, einer Nut-, einer Kantenleim-, einer Kapp-, einer Lackier-, einer Bohr-, einer Dübel-, einer Ziehklingen-, einer Schleif-, einer Vergütungs-, einer Beschlagsetzbearbeitungseinrichtung und einer Kombination der vorherigen.

Der Träger für das zumindest eine Bearbeitungsmodul und die Werkstücktransporteinrichtung können über ein gemeinsames, beispielsweise u-förmiges Maschinenbett verbunden sein. Ist das Maschinenbett u-förmig ausgebildet, kann der Bereich zwischen dem Träger und der Werkstücktransporteinrichtung als Aufnahmebereich für Späne oder andere bei der Bearbeitung der Werkstücke anfallende Abfallprodukte vorgesehen sein.

Sind in einer Ausgestaltung jeweils ein Träger seitlich zur Werkstücktransporteinrichtung vorgesehen, können die Träger und die Werkstücktransporteinrichtung über ein gemeinsames, beispielsweise u-förmiges Maschinenbett verbunden sein.

Wird ein gemeinsames Maschinenbett verwendet, so wird eine besonders steife Ausführung und eine präzise Ausrichtung der Baugruppen zueinander erreicht.

Alternativ zu den genannten Ausgestaltungen ist es möglich, den Träger und die Werkstücktransporteinrichtung jeweils einzeln aufzustellen und zu lagern, um die genannten Baugruppen schwingungstechnisch zu entkoppeln.

In einer Ausführungsform werden Ausleger zur Anbringung von Bearbeitungsmodulen an einem Träger verwendet, der sich auf einer Seite der Werkstücktransporteinrichtung erstreckt. Allerdings können statt der beschriebenen Ausleger auch Portale, oder eine Kombination hiervon vorgesehen werden.

Alternativ kann auf beiden Seiten der Werkstücktransporteinrichtung jeweils ein Träger vorgesehen werden, welche wiederum auf beiden Seiten der Werkstücktransporteinrichtung Stützeinrichtungen, bspw. Ausleger oder Portale, mit Bearbeitungseinheiten aufnehmen. Somit besteht die Möglichkeit, auf beiden Seiten der Schmalfläche gleichzeitig Bearbeitungen durchzuführen.

Alternativ oder zusätzlich kann an einem Bearbeitungsmodul zwei Bearbeitungseinheiten aufgenommen werden, um z.B. beide Schmalflächen eines Werkstücks parallel zu bearbeiten.

### Kurze Beschreibung der Zeichnungen

- Fig. 1: ist eine perspektivische Ansicht einer bevorzugten Ausführungsform der erfindungsgemäßen Bearbeitungsmaschine.
- Fig. 2: ist eine Detailansicht der beim Kettenförderer der bevorzugten Ausführungsform verwendeten Förderkette und Versorgungskette.
- Fig. 3: ist eine weitere Detailansicht der in Fig. 2 dargestellten Förderkette und Versorgungskette.
- Fig. 4: zeigt einzelne Kettenglieder der in Fig. 2 dargestellten Versorgungskette.
- Fig. 5: zeigt eine Modifikation der in Fig. 2 - 4 dargestellten Förderkette.
- Fig. 6: ist eine schematische Detailansicht der in Fig. 5 gezeigten Modifikation der Versorgungskette
- Fig. 7: zeigt eine weitere Variante des Anschlusses der Versorgungskette.
- Fig. 8: zeigt in einer Detailansicht verschiedene Varianten von Halteelementen.

### Detaillierte Beschreibung der bevorzugten Ausführungsformen

Nachfolgend werden anhand der beigefügten Zeichnungen bevorzugte Ausführungsformen und Modifikationen hiervon im Detail erläutert. Weitere in diesem Zusammenhang genannte Varianten können jeweils einzeln miteinander kombiniert werden, um neue Ausführungsformen auszubilden.

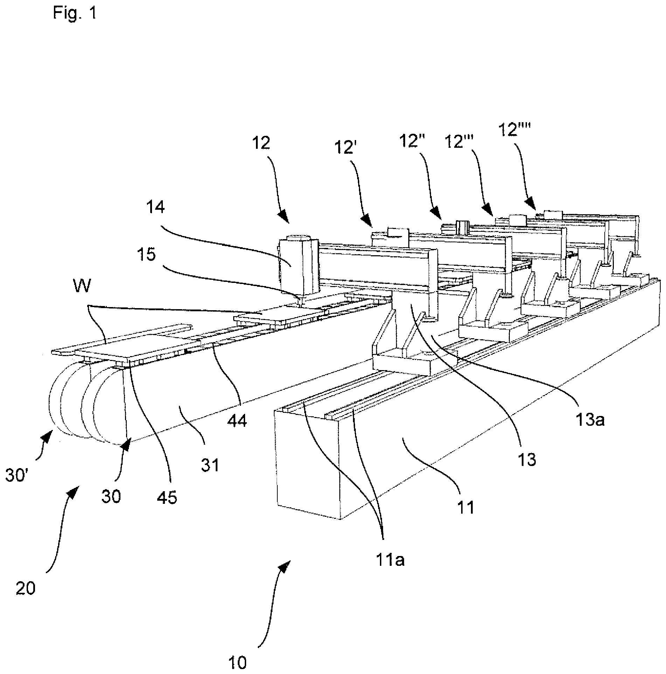

Die in Fig. 1 dargestellte Bearbeitungsmaschine umfasst eine Bearbeitungseinrichtung 10 sowie einen Werkstücktransport 20. Der Werkstücktransport 20 ist hierbei zumindest abschnittsweise parallel zur Bearbeitungseinrichtung 10 angeordnet. Obwohl die Bearbeitungseinrichtung 10 und der Werkstücktransport 20 üblicherweise mittels eines gemeinsamen Maschinenbetts miteinander verbunden sind, können die Bearbeitungseinrichtung 10 und der Werkstücktransport 20 auch getrennt voneinander vorgesehen sein.

Die Bearbeitungseinrichtung 10 umfasst einen länglichen Träger 11, der an der in vertikaler Richtung oberen Seite Transportschienen 11a aufweist. Die Transportschienen 11a dienen dazu, Bearbeitungsmodule 12 bis 12'''' mit dem Träger 11 zu verbinden und ggf. an diesem zu führen. Von den in Fig. 1 dargestellten und in Förderrichtung der Werkstücke nacheinander angeordneten Bearbeitungsmodulen wird nachfolgend lediglich eines näher erläutert. Die übrigen Bearbeitungsmodule unterscheiden sich primär hinsichtlich der Art und Ausgestaltung des jeweiligen Bearbeitungsaggregats.

Insbesondere umfasst das Bearbeitungsmodul 12 einen verfahrbaren Ausleger 13, der über einen Motor 13a angetrieben wird. Am verfahrbaren Ausleger 13 ist ein Bearbeitungsaggregat 14 angebracht, das entlang des verfahrbaren Auslegers 13 in horizontaler Richtung verfahren werden kann. Das Bearbeitungsaggregat 14 wiederum nimmt ein Werkzeug 15, beispielsweise einen Fräser, ein Verleimwerkzeug, eine Ziehklinge oder einen Bohrer, auf.

Die Verfahrbarkeit des Auslegers 13 gegenüber dem Träger 11 kann sowohl zur Neuausrichtung des Bearbeitungsmoduls 12 genutzt werden, als auch zur Bewegung des Bearbeitungsaggregats 14 während des Bearbeitungsvorgangs. Beispielsweise können die Positionen der Bearbeitungsmodule verändert werden, um Bearbeitungsstationen zusammenzulegen oder zu trennen. Bei einer getakteten oder alternierenden Bewegung der Werkstücke könnten somit zwei Bearbeitungsmodule eine Bearbeitung an einem über ein Zeitintervall stationär gehaltenen Werkstücks durchführen. Wird hingegen das Bearbeitungsmodul bewegt, während das Werkstück an diesem vorbeigeführt wird, kann es ggf. zweckmäßig sein, einen großzügigeren Raum für einen Bearbeitungsvorgang durch eine Beabeitungsmodul vorzusehen. Durch die Bewegbarkeit der Bearbeitungsmodule sind weitere Varianten möglich.

Zur Bewegung der Werkstücke W in kontinuierlicher, alternierender oder getakteter Weise ist parallel zur Bearbeitungseinrichtung 10 der Werkstücktransport 20 vorgesehen. Der Werkstücktransport 20 umfasst in der in Fig. 1 dargestellten Ausführungsform einen Kettenförderer 30 sowie einen weiteren Kettenförderer 30'. Allerdings ist diese Anordnung rein beispielhaft zu betrachten, und der Werkstücktransport 20 kann in weiteren Ausführungsformen lediglich einen Kettenförderer 30 oder mehr als zwei Kettenförderer aufweisen.

Der Kettenförderer 30 umfasst eine Kettenführungsschiene 31, die zur Abstützung der Förderkette 40 dient und eine Lauffläche für die Förderkette 40 bereitstellt. Die Förderkette 40 wird dabei um zwei in Endbereichen des Kettenförderers 30 angeordnete Kettenräder 32 bewegt, wobei in Fig. 1 lediglich ein Kettenrad 32 angedeutet ist.

Die Kettenräder 32 stellen somit eine umlaufende Bewegung der Förderkette sicher. Hierzu umfasst zumindest eines der Kettenräder einen Motor, der den Antrieb für die Förderkette 40 bereitstellt. Im Falle einer getakteten Bewegung initiiert der zumindest eine Motor über gewisse Zeitintervalle eine Drehbewegung des Kettenrads, und somit des Werkstücks W.

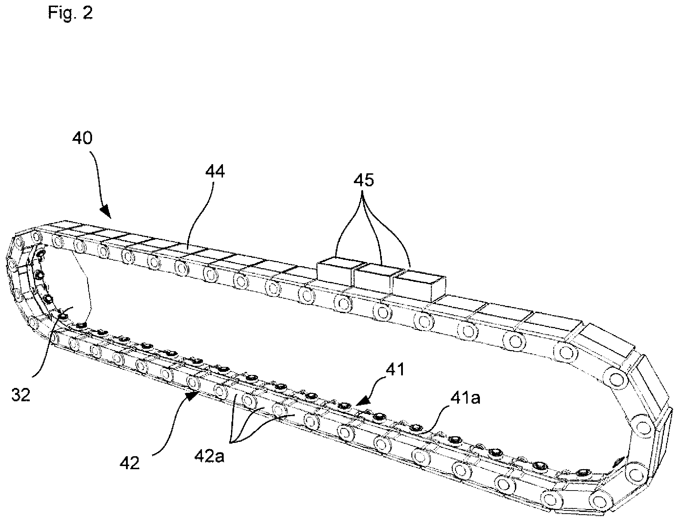

In Fig. 2 ist eine Detailansicht der am Kettenförderer 30 in Fig. 1 umlaufenden Förderkette 40 dargestellt. Die Förderkette 40 umfasst eine Kette 41, die eine Vielzahl von Kettengliedern 41a aufweist. Die einzelnen Kettenglieder 41a sind gelenkig miteinander verbunden. darüber hinaus werden Kettenglieder 41a jeweils über eine gemeinsame Platte 44 mit dem Versorgungskettenglied 42a verbunden. Die Platte 44 stellt somit das Verbindungglied zwischen einem Kettenglied 41a und einem Versorgungskettenglied 42a dar.

Die Kettenglieder 41a sind zumindest abschnittsweise aus einem metallischen Werkstoff hergestellt, und können im Bereich der Kettenräder 32 sowie während der Bewegung entlang der Kettenführungsschiene 31 durch Magnete angezogen werden. Auf diese Weise ist es möglich, die Kette 41 auch bei höheren Geschwindigkeiten gerade zu halten und ein Aufschwingen oder Vibrieren der Kette 41 zu verhindern.

Parallel zur Kette 41 ist eine Versorgungskette 42 (Versorgungsstrang) angeordnet, welche Versorgungskette 42 eine Vielzahl von Versorgungsgliedern 42a umfasst. Die Anzahl der Versorgungsglieder 42a ist in der in Fig. 2 dargestellten Ausführungsform gleich der Anzahl der Kettenglieder 41a. Allerdings können in weiteren Modifikationen auch mehr Versorgungsglieder als Kettenglieder vorgesehen sein.

Die Verbindung der Versorgungskettenglieder 42a erfolgt jeweils über zapfenartige Vorsprünge 42c, die in jeweilige Ausnehmungen 42d des benachbarten Versorgungskettengliedes 42a eingreifen.

An der Kette 41 bzw. deren Kettenglieder 41a sind jeweils von der Kettenführungsschiene 31 weg weisend Platten 44 befestigt, die sich ferner über die Versorgungsglieder 42a der Versorgungskette 42 erstrecken und mit diesen verbunden sind. Die Platten 44 stellen jeweils eine Befestigungsbasis für ein oder mehrere Halteelemente 45 dar. Ferner weisen die Platten 44, die zur Aufnahme eines Halteelements 45 vorgesehen sind, einen oder mehrere nicht dargestellte Kanäle auf, mit dem/ mit denen eine Verbindung zur Versorgungskette bereitgestellt wird, wobei die Versorgungskette, wie zuvor erläutert, einen Unterdruck oder und einen Überdruck zuführt.

Mit anderen Worten wird ausgehend von einer Vakuumquelle (oder und Überdruckquelle) Vakuum (oder und Überdruck) Druckluft mittels der Versorgungskette 42 und durch die Kanäle der Platten 44 an den Anschlussstellen der Halteelemente 45 bereitgestellt. Die genannten Anschlussstellen der Halteelemente befinden sich in dem Bereich der Platten 44, welcher der Kette 41 gegenüberliegt. Somit können die Halteelemente jeweils in dem Bereich der Platten anbringbar, welcher durch die Kette 41 verstärkt geführt wird.

In der vorliegenden Ausführungsform sind die Halteelemente 45 ähnlich zu Blocksaugern ausgebildet, die durch Aufbringen eines Vakuums zwischen deren Oberseite und einer Fläche des zu haltenden Werkstücks W eine Haltekraft am Werkstück W aufbringen. Üblicherweise sind solche Halteelemente 45 mit einer Auslöseeinheit versehen, die das Aufbringen des Vakuums initiiert.

Mit der zuvor beschriebenen parallelen Anordnung der Kette 41 und der Versorgungskette 42 kann eine Förderkette 40 mit einer Doppelfunktion bereitgestellt werden. Insbesondere sorgt die Kette 41 für eine exakte Führung von Werkstücken W entlang der Kettenführungsschiene 31. Durch Verwendung von Kettengliedern und Magnetelementen zur Führung der Kette 41 werden Bewegungstoleranzen weitestgehend vermieden.

Die Versorgungskette 42 wiederum kann genutzt werden, um Energie, im vorliegenden Fall Vakuum, über die Platten 44 in die Halteelemente 45 zu bringen. Alternativ können über pneumatische Druckluftleitungen Pneumatikspanner angetrieben werden. Dabei wird sichergestellt, dass eine ausreichend große Haltekraft aufgebracht wird, um eine Relativbewegung zwischen einem gehaltenen Werkstück und der Förderkette 40 auch während eines Bearbeitungsvorgangs im Durchlauf zu vermeiden.

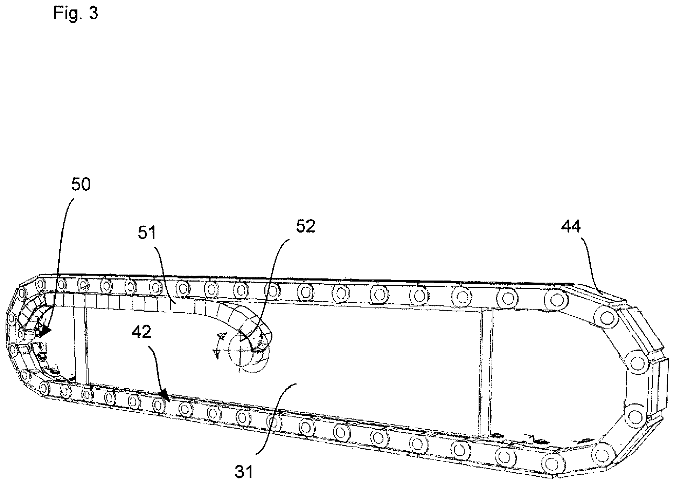

Fig. 3 zeigt eine weitere Detailansicht der in Fig. 2 dargestellten Förderkette 40. Dabei umfasst die Versorgungskette 42 ein Einspeisegelenk 50, das mit einer Schleppkette 51 in Verbindung steht. Die Schleppkette 51 wiederum ist an demjenigen dem Einspeisegelenk 50 gegenüberliegenden Ende mit einer Drehdurchführung 52 in Verbindung. Somit besteht die Möglichkeit, dass die Schleppkette 51 während einer Bewegung der Förderkette 40 mitbewegt wird, und aufgrund der drehbar ausgeführten Drehdurchführung 52 stets eine Versorgung mit einer nichtdargestellten Vakuumquelle möglich ist.

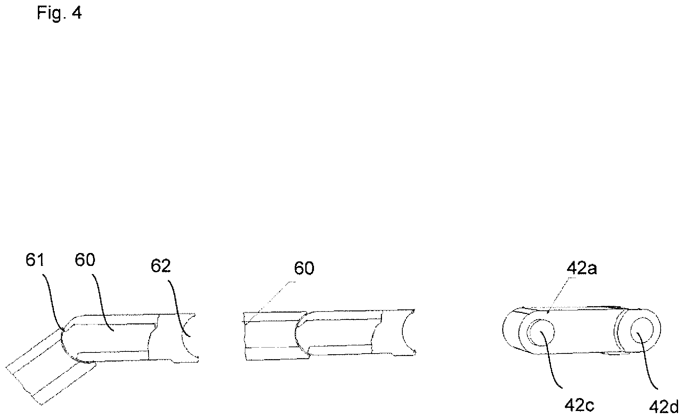

Fig. 4 zeigt die Versorgungsglieder 42a der Versorgungskette 42 im Detail. Die Versorgungsglieder 42a sind in der vorliegenden Ausführungsform als Kunststoff-Spritzgussteile ausgeführt. Um einen entlang der Versorgungskette 42 durchgehenden Versorgungskanal bereitzustellen, umfasst jedes Versorgungsglied 42a eine zum nächsten Versorgungsglied weisende, winklig ausgebildete Öffnung 60. An einem Randbereich der Öffnung 60 ist eine umlaufende Dichtung 61 vorgesehen, die eine luftdichte Verbindung zwischen zwei Versorgungsgliedern 42a trotz deren relativer Beweglichkeit (Schwenkbarkeit) zueinander gewährleistet. Das zweite Ende eines Versorgungsglieds 42a weist eine weitere Öffnung 62 auf, die komplementär zur winklig ausgerichteten Öffnung 60 des benachbarten Versorgungsglieds ausgebildet ist. In der vorliegenden Ausführungsform ist dies eine im Querschnitt halbkreisförmige Ausgestaltung.

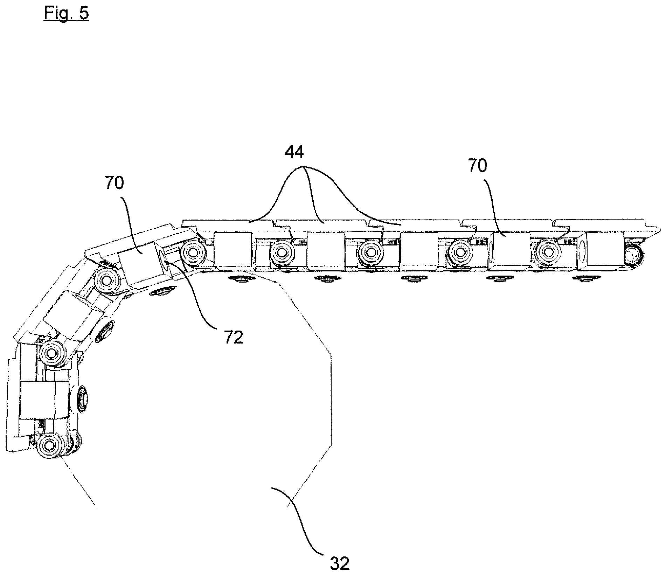

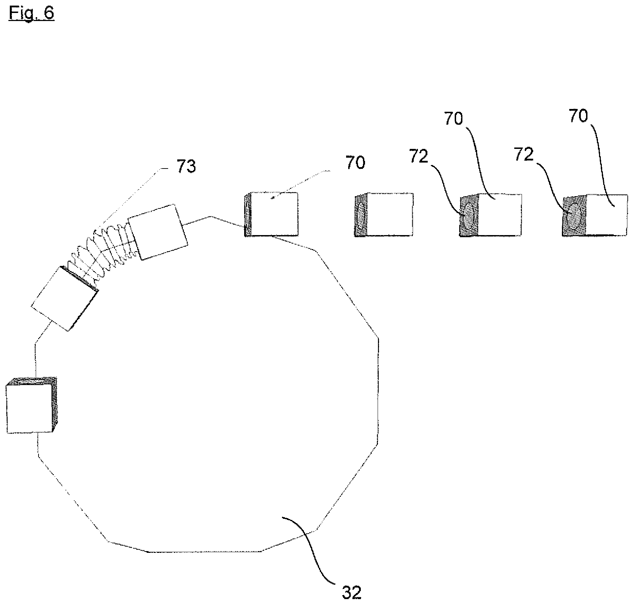

In den Figuren 5 - 6 ist eine weitere Alternative der Versorgungskette 42 dargestellt. Anstelle der ineinander greifenden Versorgungsglieder der zuvor dargestellten Ausführungsform umfasst die in den Figuren 5 - 6 dargestellte Variante blockförmig ausgestaltete Versorgungsglieder 70. Die Versorgungsglieder 70 sind über die Unterseite der Platte 44 mit der Förderkette 41 verbunden.

Die Versorgungsglieder 70 weisen eine durch den Körper des Versorgungsglieds 70 verlaufende Öffnung 72 auf. Innerhalb der Öffnung 72 ist eine nicht im Detail dargestellte Verbindung zur jeweiligen Platte 44 vorgesehen.

Alternativ kann das Versorgungsglied 70 und die Platte 44 aus einem Teil bestehen und alle Versorgungsbohrungen zu den Halteelement 45 beinhalten. Vorteilhaft als Spritzgussteil oder Druckgussteil ausgebildet. Es müssen dann nur noch die Schlauchelemente für Vakuum und Druckluft montiert werden.

Zwischen den Versorgungsgliedern 70 wird jeweils ein Schlauchelement 73 in die Öffnungen 72 benachbarter Versorgungsglieder 70 eingeführt. Somit wird die Vielzahl der Versorgungsglieder 70 jeweils über diese verbindenden Schlauchelemente 73 zu einem gemeinsamen Kanal verbunden, über den Vakuum oder und einen Überdruck zu den auf den Platten 44 angeordneten Halteelemente 45 zugeführt werden kann.

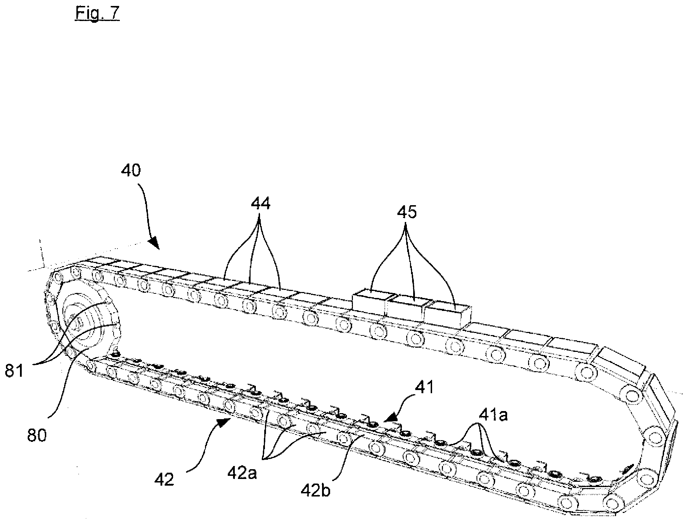

Fig. 7 zeigt eine weitere Variante zur Zuführung von Vakuum bzw. einer Pneumatikleitung zur Versorgungskette. Insbesondere ist an zumindest einem der Kettenräder 31 ein Versorgungsrad 80 angeschlossen, welches sich zusammen mit dem Kettenrad 31 dreht. Innerhalb des Versorgungsrads 80 ist eine Aufnahmekammer vorgesehen, die mittels eines im Bereich der Achse des Versorgungsrads 80 vorgesehenes Einspeiseglied mit Unter- oder Überdruck versorgt wird. Diese in Figur 7 nicht dargestellte Aufnahmekammer ist mit in gleichen Winkelabständen um das Versorgungsrad 80 angeordneten Auslässen 81 in Verbindung. Die Auslässe 81 sind derart ausgestaltet, dass sie jeweils in einen Einlass 42b eines Versorgungsglieds 42a eingreifen können.

Somit bewegt sich die Versorgungskette 42 um den Außenumfang des Versorgungsrades 80, und das nacheinander Eingreifen der Auslässe 81 in die jeweiligen Einlässe 42b -sorgt dafür, dass die Versorgungskette 42 stets mit Unter-/Überdruck versorgt wird, der wiederum im Bereich der Halteelemente 45 zum Halten eines Werkstücks bzw. Betätigung der Halteelemente 45 verwendet wird.

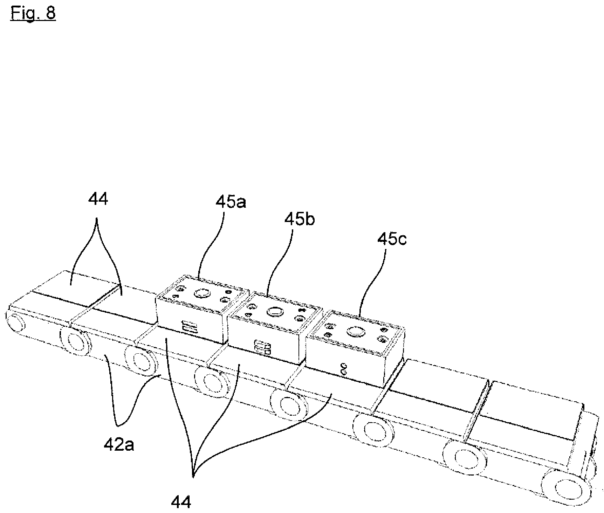

Fig. 8 ist eine weitere Detailansicht der Förderkette 40 mit an den Platten 44 befestigten, in der vorliegenden Darstellung unterschiedlichen Halteelementen 45a-45c. Insbesondere handelt es sich bei den gezeigten Halteelementen um ein mechanisch bestätigbares Halteelemente 45a, ein magnetisch betätigbares Halteelement 45b und ein pneumatisch betätigbares Halteelement 45c. Bei pneumatisch betätigbaren Halteelement 45c sind seitlich zwei Öffnungen für Druckluftanschlüsse vorgesehen.

Die vorliegende Erfindung ist nicht auf den Einsatz von Halteelementen 45 beschränkt, die über ein Vakuum zwischen dem Halteelement 45 und einer Fläche des Werkstücks W eine Haltekraft aufbringen. Vielmehr können an den Platten 44 auch mechanische Greifer angebracht werden, die beispielsweise mittels Vakuum/Druckluft bewegt werden.

Eine weitere Möglichkeit ist es, derartige Greifer elektrisch oder induktiv zu betätigen. Innerhalb der Versorgungskette werden in diesem Fall die elektrischen Leitungen für die Greifer geführt.

In den zuvor dargestellten Ausführungsformen wird eine Versorgungskette vorgesehen, die durch entsprechende Verbindungen ein gemeinsames Vakuumsystem bereitstellt. Allerdings kann die Versorgungskette auch in Abschnitte unterteilt sein, die jeweils einzeln mit Unterdruck/Vakuum oder und Überdruck/Pneumatik versorgt werden.

Dabei ist es auch möglich, dass innerhalb der Versorgungskette Vakuum/Unterdruckquellen aufgenommen werden, die entsprechend der Anordnung der Halteelemente abschnittsweise Vakuum bereitstellen.

In der zuvor beschriebenen Ausführungsform sind Ausleger 13 an einem Träger angebracht, der sich auf einer Seite der Werkstücktransporteinrichtung erstreckt. Allerdings können statt der beschriebenen Ausleger auch Portale, oder eine Kombination hiervon vorgesehen werden. Generell kommen deshalb Stützeinrichtungen zum Einsatz.

Alternativ kann auf beiden Seiten der Werkstücktransporteinrichtung 20 jeweils ein Träger 11 vorgesehen werden, welche wiederum auf beiden Seiten der Werkstücktransporteinrichtung Stützeinrichtungen, bspw. Ausleger oder Portale, mit Bearbeitungseinheiten aufnehmen. Somit besteht die Möglichkeit, auf beiden Seiten der Schmalfläche gleichzeitig Bearbeitungen durchzuführen.

Alternativ oder zusätzlich kann an einem Stützelement zwei Bearbeitungseinheiten aufgenommen werden, um z.B. beide Schmalflächen eines Werkstücks parallel zu bearbeiten.

## Patentansprüche

1. Förderkette (40) für eine Werkstücktransporteinrichtung (20), welche Werkstücktransporteinrichtung (20) für eine Bearbeitungsmaschine einsetzbar ist, mit der Werkstücke aus Holz, Holzwerkstoffen, Kunststoff oder metallische Werkstücke bearbeitet werden, aufweisend:
Eine Kette (41), die eine Vielzahl von insbesondere magnetisch anziehbaren Kettengliedern (41a) aufweist,
einen Versorgungsstrang (42) mit einer Vielzahl von Versorgungsgliedern (42a, 70), welcher Versorgungsstrang (42) parallel zur Kette (41) vorgesehen ist,
**dadurch gekennzeichnet, dass** die Kette (41) und der Versorgungsstrang (42) mittels gemeinsamer Platten (44) zur Aufnahme eines Halteelements (45) in Verbindung stehen.

2. Förderkette (40) gemäß Anspruch 1, bei der die Kettenglieder (41a) und die Versorgungsglieder (42a, 70) paarweise mittels einer Platte 44 miteinander verbunden sind.

3. Förderkette (40) gemäß einem der vorangegangenen Ansprüche, bei der die Platten einen Kanal zur Verbindung eines Halteelements mit dem Versorgungsstrang (42) aufweisen.

4. Förderkette (40) gemäß einem der vorangegangenen Ansprüche, bei der die Platten (44) in dem Bereich, der der Kette (41) gegenüberliegt, einen Anschlussbereich für ein Halteelement aufweisen.

5. Förderkette (40) gemäß einem der vorangegangenen Ansprüche, **dadurch gekennzeichnet, dass** an mindestens einer der Platten (44) ein Halteelement (45) angebracht ist, wobei das Halteelement (45) eine insbesondere pneumatisch betätigbare Klemmeinrichtung oder ein Vakuumsauger ist.

6. Förderkette (40) gemäß einem der vorangegangenen Ansprüche, **dadurch gekennzeichnet, dass** die Versorgungsglieder (42a) Spritzgusselemente sind, die miteinander einen gemeinsamen Kanal, insbesondere Vakuumversorgungskanal oder und Druckluftkanal, ausbilden.

7. Förderkette (40) gemäß Anspruch 6, bei der jedes Versorgungsglied (42a) eine Dichtung (61) zur Ausbildung einer luftdichten Verbindung aufweist.

8. Förderkette (40) gemäß einem der Ansprüche 1-5, **dadurch gekennzeichnet, dass** die Versorgungsglieder (70) mittels Schlauchelement (73) verbunden sind, um einen gemeinsamen Kanal, insbesondere Vakuumversorgungskanal, ausbilden.

9. Förderkette (40) gemäß einem der vorangegangenen Ansprüche, **dadurch gekennzeichnet, dass** der Versorgungsstrang (42) ein Einspeiseglied (50) aufweist, das mit einer Schleppkette (51) in Verbindung steht, wobei die Schleppkette (51) ist mit einer Drehdurchführung (52) verbunden ist.

10. Förderkette (40) gemäß Anspruch 9, **dadurch gekennzeichnet, dass** das Einspeiseglied (50) eine gelenkige und luftdichte Anbindung zur Schleppkette (51) bereitstellt.

11. Förderkette (40) gemäß einem der vorangegangenen Ansprüche, **dadurch gekennzeichnet, dass** die Versorgungsglieder (42a) jeweils einen Einlass (42b) zur Verbindung mit einem Auslass (81) eines Versorgungsrades (80) aufweist.

12. Werkstücktransporteinrichtung (20) für eine Bearbeitungsmaschine, mit welcher Bearbeitungsmaschine Werkstücke aus Holz, Holzwerkstoffen, Kunststoff oder metallische Werkstücke während einer kontinuierlichen, alternierenden oder getakteten Bewegung bearbeitet werden können, aufweisend:
Eine Kettenführungsschiene (31) mit Kettenrädern (32), sowie eine entlang der Kettenführungsschiene (31) und Kettenräder (32) geführte Förderkette (40) gemäß einem der vorangegangenen Ansprüche.

13. Werkstücktransporteinrichtung (20) gemäß Anspruch 12, wobei die Werkstücktransporteinrichtung (20) mehrere Kettenführungsschienen (31) mit entsprechenden Förderketten (40) aufweist.

14. Werkstücktransporteinrichtung (20) gemäß Anspruch 12 oder 13, bei der bevorzugt mittig zwischen den Kettenrädern (32) eine Drehdurchführung (52) angeordnet ist, welche Drehdurchführung (52) mit einer Schleppkette (51) verbunden ist, wobei die Schleppkette (51) an einem Einspeiseglied (50) des Versorgungsstrangs (42) befestigt ist, oder an zumindest einem der Kettenräder ein Versorgungsrad (80) vorgesehen ist, welches Versorgungsrad (80) sich zusammen mit dem Kettenrad (32) dreht.

15. Bearbeitungsmaschine mit einer Werkstücktransporteinrichtung (20) gemäß einem der Ansprüche 12-14, ferner umfassend:
Eine Bearbeitungseinrichtung (10) mit einem Träger (11) sowie zumindest einem am Träger (11) angebrachten Bearbeitungsmodul (12-12''''), welcher Träger (11) parallel zur Kettenführungsschiene (31) angeordnet ist.

## Claims

1. Conveyer chain (40) for a workpiece transport device (20), which workpiece transport device (20) can be used for a processing machine, with which workpieces made from wood, derived timber products, plastic or metallic workpieces are processed, having:
a chain (41) which has a plurality of in particular magnetically attractable chain links (41a),
a supply run (42) with a plurality of supply members (42a, 70), which supply run (42) is provided parallel to the chain (41),
**characterised in that** the chain (41) and the supply run (42) are connected by means of joint plates (44) to receive a supporting element (45).

2. Conveyer chain (40) according to claim 1, in which the chain links (41a) and the supply members (42a, 70) are connected to one another in pairs by means of a plate 44.

3. Conveyer chain (40) according to one of the preceding claims, in which the plates have a channel for connecting a supporting element to the supply run (42).

4. Conveyer chain (40) according to one of the preceding claims, in which the plates (44) have a connection region for a supporting element in the region which is opposite the chain (41).

5. Conveyer chain (40) according to one of the preceding claims, **characterised in that** a supporting element (45) is attached to at least one of the plates (44), wherein the supporting element (45) is an in particular pneumatically actuatable clamping device or a vacuum suction device.

6. Conveyer chain (40) according to one of the preceding claims, **characterised in that** the supply members (42a) are injection-moulded elements which with one another form a joint channel, in particular vacuum supply channel or and compressed air channel.

7. Conveyer chain (40) according to claim 6, in which each supply member (42a) has a seal (61) to form an air-tight connection.

8. Conveyer chain (40) according to one of claims 1-5, **characterised in that** the supply members (70) are connected by means of hose element (73) to form a joint channel, in particular vacuum supply channel.

9. Conveyer chain (40) according to one of the preceding claims, **characterised in that** the supply run (42) has a feed member (50) which is connected to a drag chain (51), wherein the drag chain (51) is connected to a rotary transmission leadthrough (52).

10. Conveyer chain (40) according to claim 9, **characterised in that** the feed member (50) provides flexible and air-tight tethering to the drag chain (51).

11. Conveyer chain (40) according to one of the preceding claims, **characterised in that** the supply members (42a) have in each case an inlet (42b) for connection to an outlet (81) of a supply wheel (80).

12. Workpiece transport device (20) for a processing machine, with which processing machine workpieces made from wood, derived timber products, plastic or metallic workpieces may be processed during a continuous, alternating or cycled movement, having:
a chain guide rail (31) with chain wheels (32), and a conveyer chain (40) according to one of the preceding claims guided along the chain guide rail (31) and chain wheels (32).

13. Workpiece transport device (20) according to claim 12, wherein the workpiece transport device (20) has several chain guide rails (31) with corresponding conveyer chains (40).

14. Workpiece transport device (20) according to claim 12 or 13, in which a rotary transmission leadthrough (52) is arranged preferably centrally between the chain wheels (32), which rotary transmission leadthrough (52) is connected to a drag chain (51), wherein the drag chain (51) is attached to a feed member (50) of the supply run (42), or a supply wheel (80) is provided on at least one of the chain wheels, which supply wheel (80) is rotated together with the chain wheel (32).

15. Processing machine having a workpiece transport device (20) according to one of claims 12-14, further comprising:
a processing device (10) with a support (11) and at least one processing module (12-12" ") attached to the support (11), which support (11) is arranged parallel to the chain guide rail (31).

## Revendications

1. Transporteur à chaîne (40) pour un dispositif de transport de pièces (20), lequel dispositif de transport de pièces (20) est utilisable pour une machine d'usinage avec laquelle des pièces en bois, en dérivés de bois ou en plastique ou des pièces en métal sont usinées, comportant :
une chaîne (41) qui comporte une multiplicité d'éléments de chaîne (41a) pouvant être attirés notamment magnétiquement,
une ligne d'alimentation (42) avec une multiplicité d'éléments d'alimentation (42a, 70), laquelle ligne d'alimentation (42) est prévue parallèlement à la chaîne (41), **caractérisé en ce que** la chaîne (41) et la ligne d'alimentation (42) sont en liaison au moyen de plaques (44) communes pour recevoir un élément de retenue (45).

2. Transporteur à chaîne (40) selon la revendication 1, où les éléments de chaîne (41a) et les éléments d'alimentation (42a, 70) sont reliés entre eux par paires au moyen d'une plaque 44.

3. Transporteur à chaîne (40) selon l'une des revendications précédentes, où les plaques comportent un canal pour relier un élément de retenue à la ligne d'alimentation (42).

4. Transporteur à chaîne (40) selon l'une des revendications précédentes, où les plaques (44) comportent, dans la zone qui est en regard de la chaîne (41), une zone de raccordement pour un élément de retenue.

5. Transporteur à chaîne (40) selon l'une des revendications précédentes, **caractérisé en ce qu'**un élément de retenue (45) est agencé sur au moins l'une des plaques (44), l'élément de retenue (45) étant un dispositif de serrage notamment actionnable de façon pneumatique ou une ventouse à vide.

6. Transporteur à chaîne (40) selon l'une des revendications précédentes, **caractérisé en ce que** les éléments d'alimentation (42a) sont des éléments moulés par injection qui forment conjointement un canal commun, notamment un canal d'alimentation à vide ou un canal à air comprimé.

7. Transporteur à chaîne (40) selon la revendication 6, où chaque élément d'alimentation (42a) comporte un joint d'étanchéité (61) pour former une liaison étanche à l'air.

8. Transporteur à chaîne (40) selon l'une des revendications 1 à 5, **caractérisé en ce que** les éléments d'alimentation (70) sont reliés au moyen d'un élément en tuyau (73) pour former un canal commun, notamment un canal d'alimentation à vide.

9. Transporteur à chaîne (40) selon l'une des revendications précédentes, **caractérisé en ce que** la ligne d'alimentation (42) comporte un élément d'introduction (50) qui est en liaison avec une chaîne à raclettes (51), la chaîne à raclettes (51) étant reliée à un passage tournant (52).

10. Transporteur à chaîne (40) selon la revendication 9, **caractérisé en ce que** l'élément d'introduction (50) fournit une liaison articulée et étanche à l'air avec la chaîne à raclettes (51).

11. Transporteur à chaîne (40) selon l'une des revendications précédentes, **caractérisé en ce que** les éléments d'alimentation (42a) comportent chacun une entrée (42b) pour la liaison avec une sortie (81) d'une roue d'alimentation (80).

12. Dispositif de transport de pièces (20) pour une machine d'usinage avec laquelle machine d'usinage des pièces en bois, en dérivés de bois, en plastique ou des pièces en métal peuvent être usinées pendant un mouvement continu, alterné ou cadencé, comportant :
un rail de guidage de chaîne (31) avec des roues de chaîne (32) ainsi qu'un transporteur à chaîne (40), guidé le long du rail de guidage de chaîne (31) et des roues de chaîne (32), selon l'une des revendications précédentes.

13. Dispositif de transport de pièces (20) selon la revendication 12, le dispositif de transport de pièces (20) comportant plusieurs rails de guidage de chaîne (31) avec des transporteurs à chaînes (40) correspondants.

14. Dispositif de transport de pièces (20) selon la revendication 12 ou 13, où un passage tournant (52) est agencé de préférence au centre entre les roues de chaîne (32), lequel passage tournant (52) est relié à une chaîne à raclettes (51), la chaîne à raclettes (51) étant fixée à un élément d'introduction (50) de la ligne d'alimentation (42), ou une roue d'alimentation (80) étant prévue sur au moins l'une des roues de chaîne, laquelle roue d'alimentation (80) tourne conjointement à la roue de chaîne (32).

15. Machine d'usinage avec un dispositif de transport de pièces (20) selon l'une des revendications 12 à 14, comprenant de plus :
un dispositif d'usinage (10) avec un support (11) ainsi qu'avec au moins un module d'usinage (12 à 12"") agencé sur le support (11), lequel support (11) est agencé parallèlement au rail de guidage de chaîne (31).
